# EUROPÄISCHE PATENTSCHRIFT

(11) **EP 0 803 042 B1**
(45) Veröffentlichungstag und Bekanntmachung des Hinweises auf die Patenterteilung: **19.08.1998**
(21) Anmeldenummer: 96900836.6
(22) Anmeldetag: 19.01.1996
(51) Int. Cl.: F23G 7/06, B01D 53/34

(54) **VORRICHTUNG ZUR REINIGUNG VON ABGASEN**
WASTE GAS PURIFICATION DEVICE
DISPOSITIF POUR EPURER DES GAZ BRULES

(30) Priorität: 23.01.1995 DE 19501914
(43) Veröffentlichungstag der Anmeldung: 29.10.1997
(73) Patentinhaber: CENTROTHERM ELEKTRISCHE ANLAGEN GMBH + CO., 89143 Blaubeuren (DE)
(72) Erfinder: HARTUNG, Rolf, D-89143 Blaubeuren (DE); AUTENRIETH, Hans, D-89143 Blaubeuren (DE); KRÖDEL, Gunter, D-01109 Dresden (DE); FABIAN, Lutz, D-01217 Dresden (DE); RESCH, Dietmar, D-01109 Dresden (DE)
(74) Vertreter: Patentanwälte Lippert, Stachow, Schmidt & Partner
(86) Internationale Anmeldenummer: DE9600076
(87) Internationale Veröffentlichungsnummer: WO9623173

(56) Entgegenhaltungen:
- EP-A- 0 160 524
- EP-A- 0 307 764
- EP-A- 0 346 893
- US-A- 5 123 836

## Beschreibung

Die Erfindung betrifft eine Vorrichtung zur Reinigung von Abgasen, insbesondere von Abgasen aus CVD-, Plasmaätz- oder ähnlichen Prozessen, mit wenigstens einem Brennraum in vertikaler Anordnung innerhalb eines äußeren Rohres, der durch eine schirmartige Abdeckung nach oben begrenzt ist und einem innen- oder außenmischenden Brenner, dessen Brenngasdüsen in den Brennraum hineinragen, wobei dem Brenner Brenngas, Sauerstoff, oder Luft und Abgas zugeführt wird, sowie Mitteln zur Zuführung und Ableitung von Sorptionsmittel oder Sorptions- und Oxidationsmittel in einen Waschraum oberhalb des Brennraumes.

Die Reinigung derartiger Abgase erfolgt üblicherweise in zwei Stufen, indem die Abgase zunächst verbrannt und anschließend in einer Wäsche gereinigt werden. Die Verbrennung der Abgase, bzw. deren Oxidation erfolgt hierbei mit Hilfe von gasbetriebenen Brennern innerhalb einer Brennkammer.

Aus der EP 0 346 893 B1 ist eine derartige Vorrichtung zur Reinigung von Abgasen bekannt geworden, die aus einem nach unten im wesentlichen geschlossenen und oben offenen Grundkörper mit kreisförmigem Querschnitt besteht. Dieser Grundkörper besteht aus einer zylindrischen Außenwand und einer konzentrisch zu dieser angeordneten Innenwand, die eine Brennkammer begrenzt. In diesen Grundkörper ragt von unten ein Brenner zur Verbrennung der gemeinsam mit dem Brenngas dem Brenner zugeführten Abgase in die Brennkammer hinein. Die Brennkammer wird nach oben hin durch einen Spritzschutz begrenzt, über dem sich eine Wasch- oder Spülkammer befindet. In dieser Spülkammer befindet sich eine zentrisch angeordnete Düse, mit deren Hilfe ein Sprühkegel eines Spülmittels erzeugt wird, mit dem Aerosole und feste Bestandteile aus dem verbrannten Abgas herausgespült werden. Mit dem Spritzschutz wird verhindert, daß Spülmittel in die Brennkammer und damit auf den Brenner oder in die Flamme gesprüht wird.

Die herausgespülten Reste werden mit dem Spülmittel entlang der Innenseite der zylindrischen Außenwand nach unten befördert und durch einen im Grundkörper befindlichen Abfluß abgeleitet.

Als nachteilig hat sich bei dieser Vorrichtung zur Reinigung von Abgasen erwiesen, daß Reinigungsvorgänge der Vorrichtung selbst sehr aufwendig sind und daß insbesondere Schwierigkeiten bestehen, den Brennraum zu reinigen. Außerdem ist eine Verschmutzung der Brenngasdüsen und der Abgasdüse selbst nahezu unvermeidbar, so daß eine regelmäßige Wartung des Brenners erforderlich ist, um einen sicheren Betrieb zu gewährleisten.

Die US 5,123,836 zeigt weiterhin eine Vorrichtung zur Verbrennung von toxische Gase enthaltenden Abgasen innerhalb einer Brennkammer. Am oberen Ende der Brennkammer ist ein Brenner angeordnet, der eine abwärts in die Brennkammer gerichtete Brennerflamme erzeugt. Dem Brenner wird nebendem Brenngas das zu verbrennende toxische Gas zugeführt. Unterhalb der Brennerflamme befinden sich Sprühdüsen, welche einen Wassernebel erzeugen, mit dessen Hilfe die bei der Verbrennung entstehenden Mikropartikel ausgewaschen werden. Dabei wird das verbrannte Gas gleichzeitig schnell abgekühlt. Zusätzlich wird auf der Innenwand der Brennkammer ein in tangentialer Richtung abwärts fließender Wasserfillm erzeugt. Dieser Wasserfilm verhindert die Ablagerung von Mikropartikeln auf der Innenwand der Brennkammer.

Diese Vorrichtung ist sehr aufwendig in ihrer Konstruktion und ist nur zur Beseitigung von Mikropartikeln aus dem verbrannten Gas geeignet.

Der Erfindung liegt deshalb die Aufgabe zugrunde, eine Vorrichtung zur Reinigung von Abgasen zu schaffen, die kostengünstig herstellbar ist und bei der die Nachteile des Standes der Technik vermieden werden.

Die der Erfindung zugrundeliegende Aufgabe wird bei einer Vorrichtung zur Reinigung von Abgasen der eingangs genannten Art dadurch gelöst, daß der Brenner zentrisch in der Abdeckung befestigt ist, daß der Brenner Brenngasdüsen und wenigstens eine Abgaszuführdüse aufweist, die senkrecht nach unten in den Brennraum gerichtet sind, daß der Brennraum am unteren Ende durch den Grundkörper begrenzt wird, daß innerhalb des äußeren Rohres ein inneres Rohr vorgesehen ist, welches sich von der Abdeckung (15) bis in den Grundkörper erstreckt und in einem Abstand oberhalb des Bodens des Grundkörpers endet, und den Brenn raum seitlich abgrenzt, wobei die beim Verbrennungsvorgang entstehenden Reaktionsprodukte entlang der Innenseite des äußeren Rohres vom Grundkörper nach oben in den Waschraum geleitet werden und wobei das Sorptionsmittel nach dessen Verteilung im Waschraum und Anreicherung mit den Reaktionsprodukten entlang der Innenseite des äußeren Rohres über den Grundkörper abgeleitet wird.

Mit dieser einfach zu realisierenden Vorrichtung zur Reinigung von Abgasen wird einerseits eine höhere Verfügbarkeit, sowie eine wesentliche Verbesserung der Vorrichtung zur Abgasreinigung erreicht. Insbesondere wird eine Beeinflussung des Verbrennungsvorganges durch Verbrennungsrückstände, die sich am Brenner, im Brennraum oder an der Innenseite des äußeren Rohres bzw. am Boden des Brennraumes absetzen, vermieden. Auch wird eine sonst mögliche Querschnittsverengung oder ein Verstopfen der Brenngasdüsen verhindert.

Um eine besonders gute Durchmischung des Brenngases mit dem Abgas zu erreichen, weist der Brenner mehrere Abgaszuführdüsen auf, die von den Brenngasdüsen konzentrisch umgeben werden.

Zur Vermeidung einer eventuellen Überhitzung ist dem Brenner eine Kühlvorrichtung zugeordnet. Dazu ist innerhalb des äußeren Rohres und oberhalb des Brenners eine Sprühdüse für das Sorptions- oder Waschmittel angeordnet, die damit einerseits zum Spülen des aus der Brennkammer austretenden Abgases dient und andererseits gleichzeitig das Gehäuse des Brenners kühlt. Die Sprühdüse kann als Ringdüse, als Vollkegel- oder Hohlkegeldüse ausgebildet sein, so daß eine ausreichende Menge an Spülflüssigkeit auf das Gehäuse des Brenners auftrifft.

Die Ringdüse ist oberhalb der Abdeckung an der Innenwandung des äußeren Rohres befestigt. Der dadurch erzeugte Sprühring ist in diesem Fall sowohl parallel zur Innenwand des äußeren Rohres, als auch auf das Gehäuse des Brenners zu richten, so daß der gesamte Querschnitt innerhalb des äußeren Rohres abgedeckt wird.

Eine wesentliche Verbesserung der Kühlung des Brenners wird erreicht, wenn die Sprühdüse über eine Zuführungsleitung mit einer Kammer innerhalb des Brenners verbunden ist, über die das Sorptions- oder Waschmittel der Sprühdüse zuführbar ist.

Auf diese Weise wird der Brenner intern gekühlt, so daß höhere Brenntemperaturen zugelassen werden können. Diese Ausführung ist damit für Wasserstoffbrenner besonders geeignet, wobei die Kammer zwischen den Brenngasdüsen und der Abgaszuführdüse, diese konzentrisch umgebend, angeordnet werden sollte.

Um eine übermäßige Erwärmung der Abdeckung und des Brenners zu vermeiden, ist zwischen dem Brennraum und der Abdeckung ein den Brenner konzentrisch umgebender und sich nach unten erweiternder Hitzeschild angeordnet. Dieser Hitzeschild verhindert außerdem eine zu starke Kühlung des zu verbrennenden Abgases.

Zur seitlichen Begrenzung des Brennraumes ist ein inneres Rohr vorgesehen, welches den Hitzeschild umschließt.

Zwischen dem Hitzeschild und der Innenwand des inneren Rohres ist ein Ringspalt ausgebildet, wobei der Raum zwischen der Abdeckung und dem Hitzeschild über Öffnungen mit dem Raum außerhalb des äußeren Rohres verbunden ist. Dadurch wird in Verbindung mit dem Unterdruck innerhalb des Brennraumes eine ständige Spülung der Raumes zwischen dem Hitzeschild und der Abdeckung erreicht.

In Fortführung der Erfindung ist im Raum zwischen der Abdeckung und dem Hitzeschild ein Düsenring mit Düsen zur Zuführung eines Reinigungsmittels angeordnet, die gegen die Innenwand des inneren Rohres gerichtet sind. Dadurch ist während der Betriebspausen der Vorrichtung eine Reinigung des Brennraumes mit Wasser oder einem Sorptionsmittel möglich, ohne daß dieser dazu geöffnet werden müßte.

Um eine ständige Ableitung des Sorptions- oder Spülmittels zu gewährleisten, ohne daß der Verbrennungsvorgang gestört wird, ist der Boden des Grundkörpers an seiner tiefsten Stelle mit einem Abfluß versehen.

In einer besonderen Ausgestaltung bestehen das äußere und das innere Rohr jeweils aus einem oberen und einem unteren Teil, die lösbar miteinander verbunden sind, wobei der Grundkörper lösbar mit dem äußeren Rohr oder dem unteren Teil des äußeren Rohres verbunden ist. Dadurch wird eine erhebliche Vereinfachung von Reinigungs- oder Wartungsvorgängen erreicht, die dadurch noch weiter verbessert werden, daß der obere Teil des äußeren Rohres mit dem daran befestigten Brenner, der Abdeckung, dem oberen Teil des inneren Rohres, dem Hitzeschild, den Öffnungen und dem Düsenring axial nach oben, bzw. der Grundkörper axial nach unten bewegbar ist.

In einer weiteren Variante der Erfindung weist der obere Teil des inneren Rohres am unteren Ende eine Querschnittsverengung auf, die mit dem oberen Ende des unteren Teiles einen Kreisringspalt bildet. Dadurch wird eine Erhöhung des Wirkungsgrades des Verbrennungsvorganges erreicht, da damit eine Rezirkulation eines Teiles des bereits verbrannten Abgases veranlaßt wird, das dadurch wiederholt dem Verbrennungsvorgang zugeführt wird. Außerdem wird somit eine Spülung der Innenseite des inneren Rohres und eine Reduzierung der Ablagerungen erreicht.

Um zu verhindern, daß in diesem Fall Spül- oder Sorptionsmittel in den Brennraum eindringt, ist zwischen dem oberen Teil des äußeren Rohres und dem oberen Teil des inneren Rohres ein Schutzrohr angeordnet, welches den oberen Rand des unteren Teiles überdeckt.

In einer weiteren Fortführung der Erfindung ist der Brennraum über Durchführungen mit dem Raum außerhalb des Rohres verbunden, in denen Vorrichtungen zur Zündung oder Überwachung des Brenners angeordnet sind; oder der Brenner selbst enthält Vorrichtungen zu dessen Zündung und Überwachung.

Zwischen der Abdeckung und der Innenseite des äußeren Rohres befindet sich weiterhin ein Bürstenrand, der das Spül- oder Sorptionsmittel an die Innenseite des äußeren Rohres ableitet und gleichzeitig eine intensivere Benetzung des Abgases bewirkt.

Das äußere Rohr ist oberhalb der Abdeckung über einen oder mehrere Abscheider an eine lufttechnische Anlage zur Erzeugung eines Unterdruckes im Brennraum und im Waschraum angeschlossen. Durch die Erzeugung des Unterdruckes wird einerseits eine Absaugung des Abgases aus dem Brennraum erreicht und gleichzeitig vermieden, daß Abgase über Spülöffnungen und den Abfluß austreten können.

Die Erfindung soll nachfolgend an einem Ausführungsbeispiel näher erläutert werden. In der zugehörigen Zeichnungen zeigen:
- Fig. 1: eine schematische Schnittdarstellung einer erfindungsgemäßen Vorrichtung zur Reinigung von Abgasen;
- Fig. 2: die Vorrichtung nach Fig. 1 mit teilbarem Brennraum;
- Fig. 3: eine Vorrichtung zur Reinigung von Abgasen mit Abgsrückführung;
- Fig. 4: eine vereinfachte Vorrichtung zur Reinigung von Abgasen ohne gesondertem Brennraum;
- Fig. 5: einen schematische Schnittdarstellung eines Brenners mit zusätzlicher Kühlvorrichtung;
- Fig. 6: eine Schnittdarstellung eines mit Brenngas- und Abgasdüsen versehenen Brenners; und
- Fig. 7: eine Draufsicht auf den Brenner nach Fig. 6.

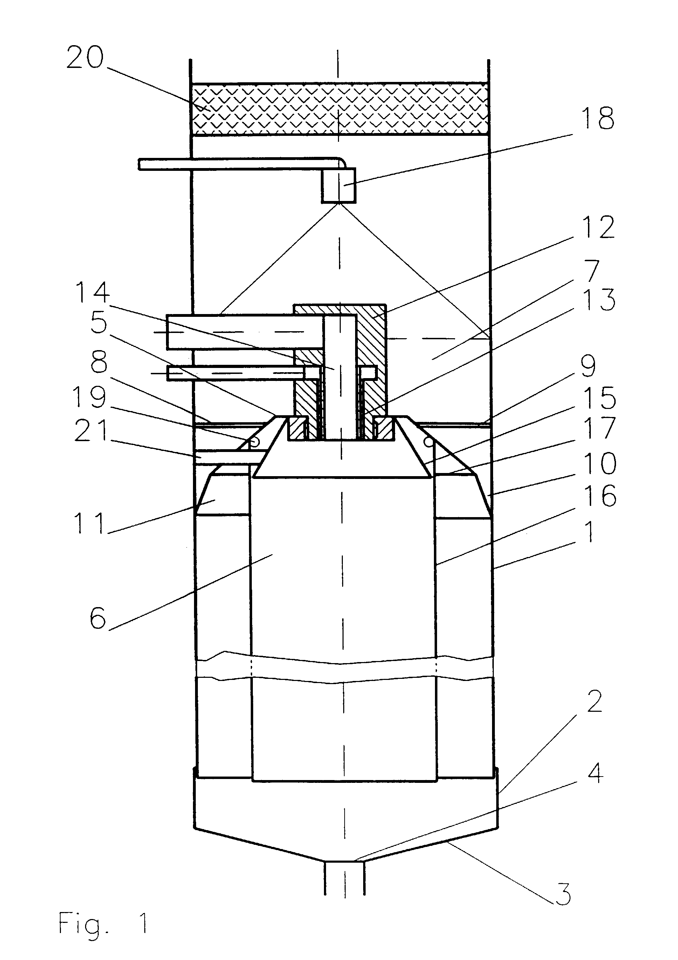

Entsprechend Fig. 1 besteht die Vorrichtung zur Reinigung von Abgasen aus einem äußeren Rohr 1 in senkrechter Anordnung, welches an seinem unteren Ende durch einen Grundkörper 2 verschlossen ist. Der Grundkörper 2 besitzt einen kegelförmigen oder nach unten gewölbten Boden 3, der an seiner tiefsten Stelle mit einem Abfluß 4 versehen ist.

Innerhalb des äußeren Rohres 1 ist eine sich nach unten erweiternde schirmartige Abdeckung 5 angeordnet, die einen unteren Brennraum 6 von einem darüber befindlichen Waschraum 7 abteilt. Die Halterung der Abdeckung 5 im äußeren Rohr 1 erfolgt dabei durch mit Öffnungen 8 versehene Verbindungselemente 9, beispielsweise Rohrstücke, an denen die Abdeckung 5 befestigt ist. Um einen Gasdurchtritt vom Brennraum 6 zum Waschraum 7 zu ermöglichen, ist der Durchmesser der Abdeckung 5 geringer, als der Innendurchmesser des äußeren Rohres 1. Dadurch wird ein ringförmiger Spalt 10 im Bereich der Innenwandung des äußeren Rohres 1 freigehalten, der durch einen an der Abdeckung 5 befestigten Bürstenrand 11 überdeckt wird.

Mittig in der schirmartigen Abdeckung 5 ist weiterhin ein Brenner 12 mit nach unten weisenden Brenngasdüsen 13 und Abgaszuführdüsen 14 befestigt. Die Befestigung des Brenners 12 an der Abdeckung 5 kann durch eine Verschraubung oder durch einen Klemmring erfolgen. Um eine gute Durchmischung des durch die Abgaszuführdüse 14 zugeführten Abgases mit dem Brenngas zu erreichen, ist die Abgaszuführdüse 14 als zentrale Düse ausgeführt, die von einer ringförmigen Brenngasdüse 13 oder mehreren Brenngasdüsen 13 umgeben wird. Als Brenngas kommt hier insbesondere Erdgas in Betracht, welches mit einem Sauerstoffüberschuß verbrannt wird, oder Wasserstoff, der ebenfalls mit Sauerstoffüberschuß verbrannt wird.

Unterhalb der Abdeckung 5 befindet sich ein den Brenner 12 bzw. die Brenngas- und Abgaszuführdüsen 13, 14 umgebender Hitzeschild 15, der sich nach unten kegelförmig erweitert und insbesondere dazu dient, die Hitzebelastung der Abdeckung 5 zu reduzieren. Zur Abgrenzung des Brennraumes 6 erstreckt sich von der Abdeckung 5 ein an dieser befestigtes inneres Rohr 16 nach unten, welches den Hitzeschild 15 umschließt. Dabei ist zwischen dem Hitzeschild 15 und der Innenwand des inneren Rohres 16 ein Ringspalt 17 freigehalten, so daß der Raum zwischen der Abdeckung 5 und dem Hitzeschild 15 über die Öffnungen 8 mit dem Raum außerhalb des äußeren Rohres 1 verbunden ist. Dadurch wird die Spülung des Raumes zwischen der Abdeckung 5 und dem Hitzeschild 15 erreicht, wenn im Brennraum 6 ein Unterdruck herrscht.

Das innere Rohr 16, das sich bis in den Grundkörper erstreckt, dient gleichzeitig zur Trennung der Flamme im Brennraum 6 von den im thermischen Reaktionsbereich zugesetzten Abgasen, die als Reaktionsgase vom Grundkörper 2 aus an der Innenseite des äußeren Rohres 1 nach oben in den Waschraum 7 geführt werden.

Im Waschraum 7 befindet sich in einem Abstand oberhalb des Brenners 12 eine Sprühdüse 18 zur Zuführung und Feinstverteilung, bzw. Erzeugung kleinster Tröpfchen eines Sorptionsmittels. Dieses Sorptionsmittel dient zum Auswaschen der beim Verbrennen des Abgases entstehenden gasförmigen oder festen Reaktionsprodukte. Der Sprühkegel der Sprühdüse 18 ist dabei als Vollkegel ausgebildet und reicht bis zur Innenseite des äußeren Rohres 1. Gleichzeitig wird auf diese Weise eine Kühlung des Brenners 12 erreicht.

Das Sorptionsmittel wird durch die Sprühdüse 18 wie ein Aerosol gleichmäßig im Waschraum 7 verteilt und anschließend durch die Abdeckung 5 und den daran befestigten Bürstenrand 11 an die Innenseite des äußeren Rohres 1 geleitet und fließt von dort in den Grundkörper 2 und über den Abfluß 4 in einen nicht dargestellten Sammelbehälter.

Zur Reinigung der Innenseite des inneren Rohres 16 befindet sich an dessen oberen Ende an der Abdeckung 5 ein Düsenring 19, mit dem während der Betriebspausen Wasser oder ein Sorptionsmittel auf die Innenseite des inneren Rohres 16 gesprüht werden kann, so daß dort befindliche Ablagerungen beseitigt oder reduziert werden können.

Den oberen Abschluß des Waschraumes 7 bildet ein Abscheider 20 zum Zurückhalten fester oder flüssiger Aerosole, der mit einer nicht dargestellten Abluftanlage verbunden ist, die gleichzeitig den nötigen Unterdruck erzeugt.

Zündung der Brennerflamme und zur Überwachung des Verbrennungsvorganges erstreckt sich eine Durchführung 21 vom äußeren Rohr 1 durch die Abdeckung 5 in den Hitzeschild 15. In der Durchführung kann ein Zündbrenner und/oder ein UV-Flammensensor angeordnet werden.

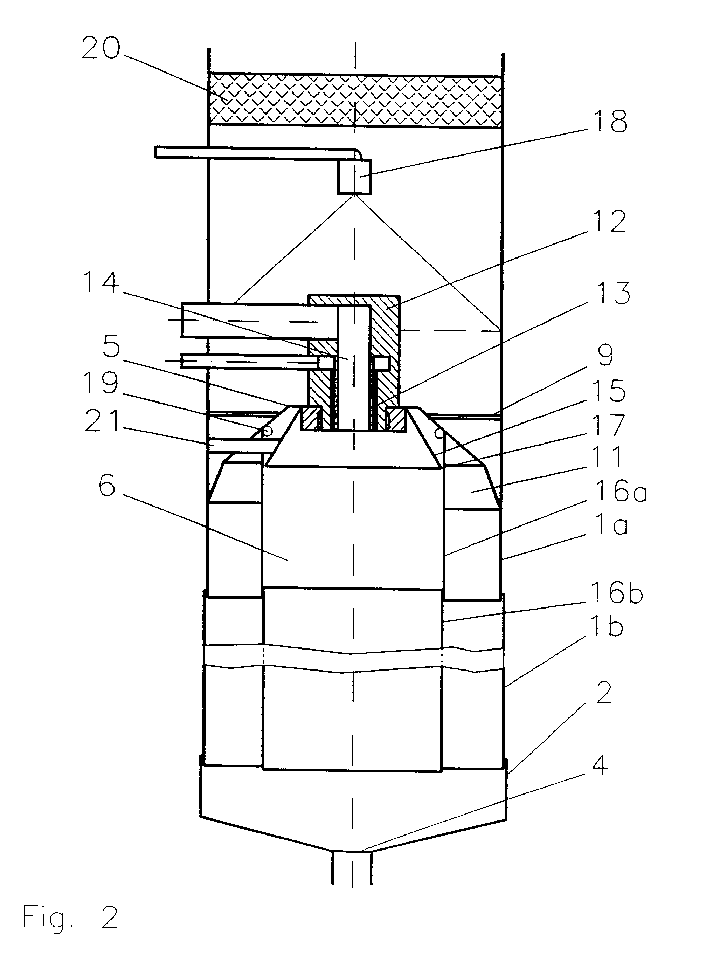

Fig. 2 zeigt grundsätzlich die gleiche Vorrichtung zur Reinigung von Abgasen, wobei das äußere und das innere Rohr 1, 16 geteilt ausgeführt sind, so daß die Vorrichtung besonders leicht zerlegt bzw. gewartet werden kann. Das äußere Rohr 1 besteht dazu aus einem oberen und einem unteren Teil 1a, 1b und das innere Rohr 16 aus einem oberen und einem unteren Teil 16a, 16b, die jeweils lösbar miteinander verbunden sind. Zusätzlich kann der Grundkörper 2 mit dem äußeren Rohr 1 oder dem unteren Teil la des äußeren Rohres 1 lösbar verbunden sein.

Das obere Teil la des äußeren Rohres 1 mit dem daran befestigten Brenner 12, der Abdeckung 5, dem oberen Teil 16a des inneren Rohres 16, dem Hitzeschild 15, den Öffnungen 8 und dem Düsenring 19 kann auch axial nach oben, oder der Grundkörper 2 axial nach unten bewegbar ausgeführt werden. Dadurch kann der Brennraum 6 besonders einfach gereinigt werden.

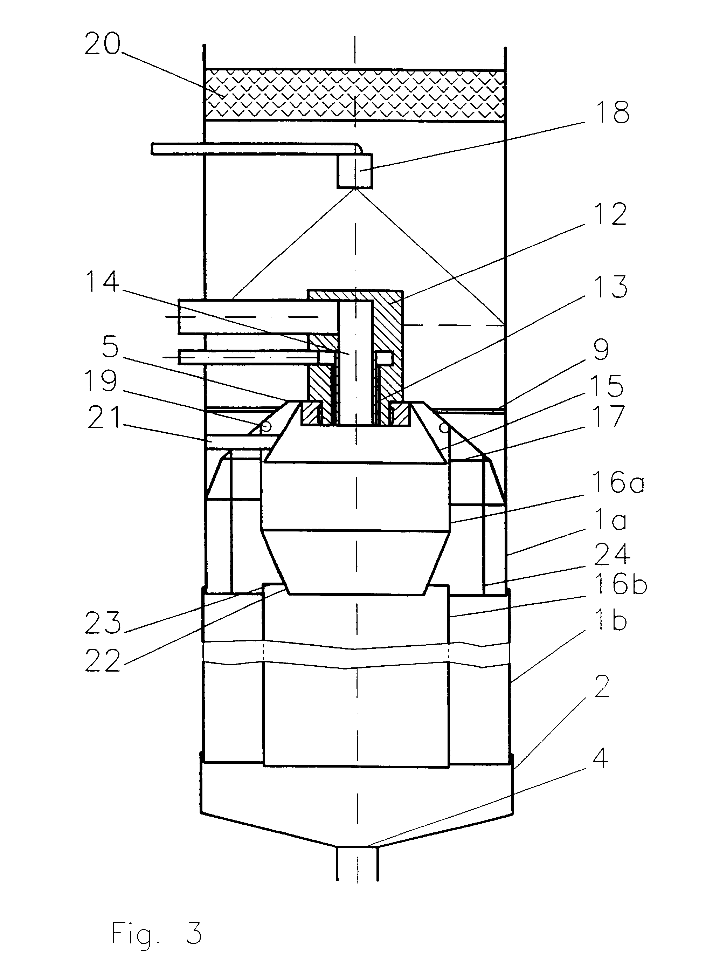

Aus Fig. 3 geht eine besondere Variante der Erfindung hervor, bei der eine interne Abgasrückführung und innere Spülung des inneren Rohres 16 realisiert ist. Der grundsätzliche Aufbau entspricht dabei der in Fig. 2 dargestellten Variante, wobei der obere Teil 16a des inneren Rohres 16 am unteren Ende eine Querschnittsverengung 22 aufweist, die konzentrisch zum unteren Teil 16b angeordnet ist und in dieses hineinragt. Durch den somit gebildeten Kreisringspalt 23 werden Teile des zwischen dem unteren Teil 16b und der Innenseite des unteren Teiles 1b nach oben beförderten Abgase noch einmal dem Brennraum 6 zugeführt und dort erneut der heißen Flamme ausgesetzt. Weiterhin wird durch diese Rückführung eine Spülung der Innenseite des unteren Teiles 16b erreicht, so daß dort die Abscheidung von Partikeln zumindest teilweise verhindert wird.

Um zu vermeiden, daß durch den Kreisringspalt 23 Sorptionsmittel in den Brennraum eindringt, befindet sich zwischen dem oberen Teil la des äußeren Rohres 1 und dem oberen Teil 16a ein Schutzrohr 24, das den oberen Rand des unteren Teiles 16b überdeckt.

Durch dieses Schutzrohr 24 wird gleichzeitig eine übermäßige Kühlung des oberen Teiles des Brennraumes 6 verhindert.

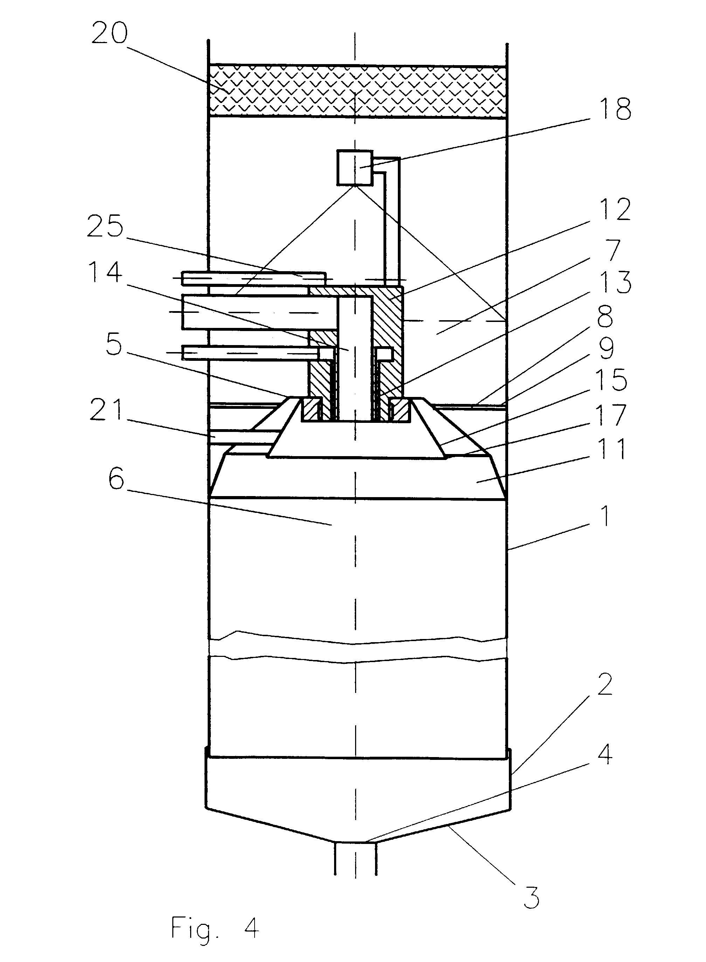

Fig. 4 zeigt eine Ausbildung die nicht Teil der Erfindung ist, bei der der Brennraum 6 nur durch das äußere Rohr 1 umschlossen ist. Um hier eine bessere Kühlung des Brenners 12 zu erreichen, erfolgt die Zuführung des Sorptionsmittels zur Sprühdüse 18 über den Brenner 12, indem die Zuführungsleitung 25 in das Gehäuse des Brenners 12 geführt ist, wie im folgenden erläutert.

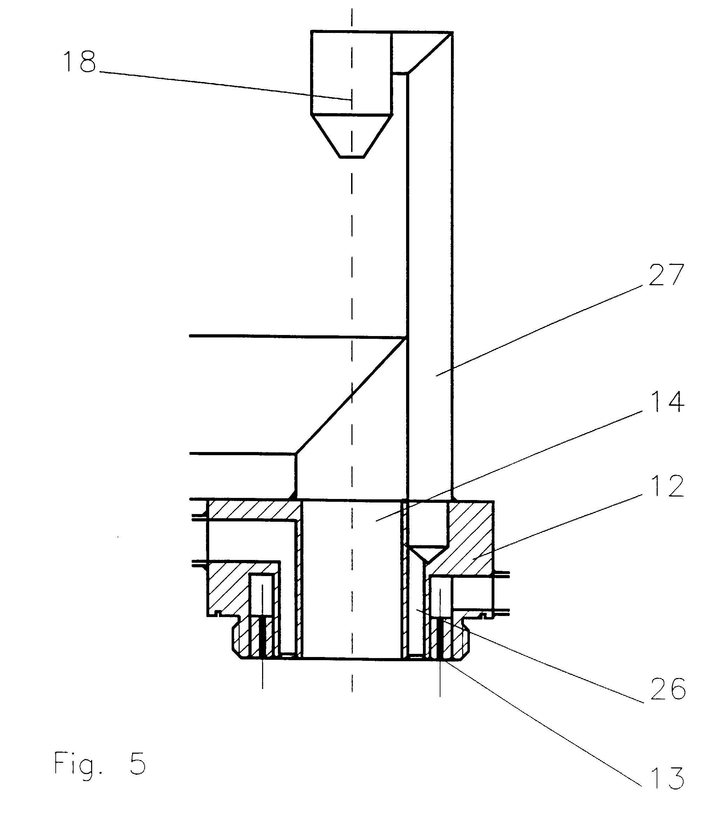

Eine besonders wirksame Variante zur Kühlung des Brenners 12 geht aus Fig. 5 hervor. Dazu ist zwischen der Abgaszuführdüse 14 und den oder der Brenngasdüse 13 eine Kammer 26 angeordnet, die die Abgaszuführdüse 14 konzentrisch umgibt. Diese Kammer 26 ist einerseits über eine Leitung 27 mit der Sprühdüse 18 und andererseits mit einer Zuführeinrichtung für das Spül- oder Sorptionsmittel verbunden. Auf diese Weise wird eine besonders intensive Kühlung des Brenners erreicht, ohne daß die Temperatur des Verbrennungsvorganges selbst beeinflußt wird. Damit ist diese Variante besonders für Wasserstoffbrenner oder für Verbrennungsvorgänge mit höherer Temperatur geeignet.

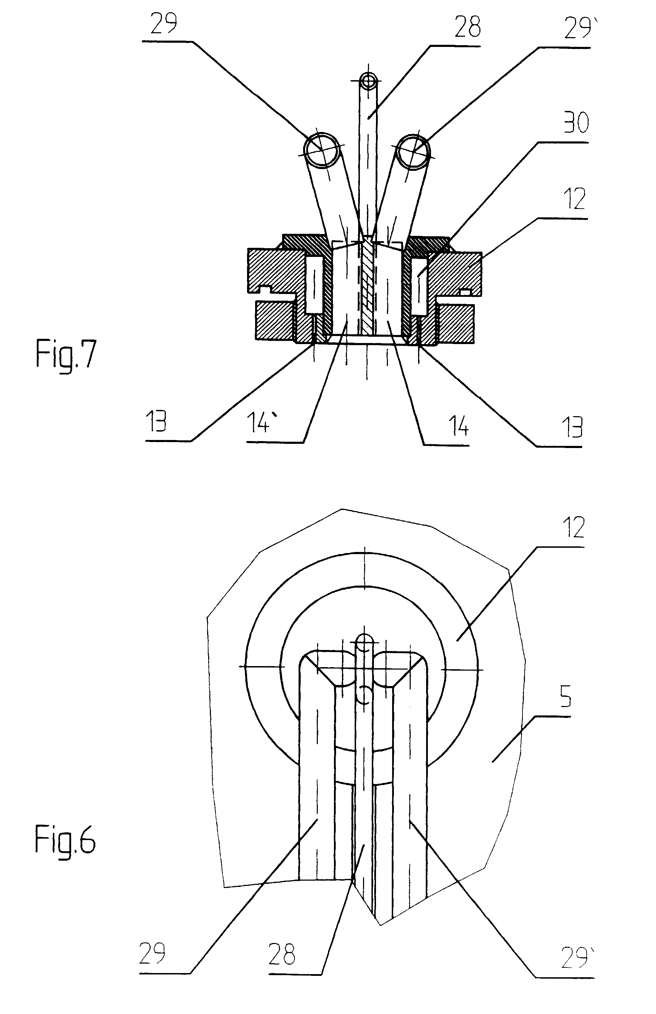

Die Fig. 6, 7 zeigen eine Anordnung zur gleichzeitigen Verbrennung von Abgasen aus unterschiedlichen Prozessen. Dazu sind, wie aus Fig. 6 ersichtlich, zwei Abgaszuführdüsen 14, 14' unmittelbar benachbart zum Brenner 12 angeordnet, wobei die Zuführung der Abgase über getrennte Abgaszuführungen 29, 29' erfolgt. Die Brenngasdüsen 13 umgeben die Abgaszuführdüsen 14, 14' und werden über eine nicht dargestellte Brenngaszuführung über eine ringförmige Ausgleichskammer 30 versorgt. Eine zusätzliche Sauerstoffzuführung 28 sorgt für eine Verbrennung mit besonders hohem Sauerstoffüberschuß.

Durch diese Anordnung ist es möglich, gleichzeitig Abgase zu verbrennen, die bei einer Vermischung außerhalb der Brennkammer unkontrolliert miteinander reagieren würden, wodurch gleichzeitig eine wesentlich effektivere Nutzung der Vorrichtung zur Reinigung von Abgasen erreicht wird.

Grundsätzlich ist die Anzahl der Abgaszuführungen 29, 29' nicht begrenzt, wobei lediglich die Größe des Brenners 12 die Anzahl der Abgaszuführdüsen 14, 14' begrenzt. Für den sicheren Betrieb mit mehreren Abgaszuführungen ist lediglich Sorge dafür zu tragen, daß eine Rückströmung des Abgases in den Abgaszuführungen 29, 29' sicher verhindert wird.

### Vorrichtung zur Reinigung von Abgasen

### Bezugszeichenliste

- 1: äußeres Rohr
- 1a: oberes Teil
- 1b: unteres Teil
- 2: Grundkörper
- 3: Boden
- 4: Abfluß
- 5: Abdeckung
- 6: Brennraum
- 7: Waschraum
- 8: Öffnung
- 9: Verbindungselement
- 10: Spalt
- 11: Bürstenrand
- 12: Brenner
- 13: Brenngasdüse
- 14: Abgaszuführdüse
- 15: Hitzeschild
- 16: inneres Rohr
- 16a: oberes Teil
- 16b: unteres Teil
- 17: Ringspalt
- 18: Sprühdüse
- 19: Düsenring
- 20: Abscheider
- 21: Durchführung
- 22: Querschnittsverengung
- 23: Kreisringspalt
- 24: Schutzrohr
- 25: Zuführungsleitung
- 26: Kammer
- 27: Leitung
- 28: Sauerstoffzuführung
- 29: Abgaszuführung
- 30: Ausgleichskammer

## Patentansprüche

1. Vorrichtung zur Reinigung von Abgasen, insbesondere von Abgasen aus CVD-, Plasmaätz- oder ähnlichen Prozessen, mit wenigstens einem Brennraum (6) in vertikaler Anordnung innerhalb eines äußeren Rohres (1), der durch eine schirmartige Abdeckung (5) nach oben begrenzt ist und einem innen- oder außenmischenden Brenner (12), dessen Brenngasdüsen (13) in den Brennraum (6) hineinragen, wobei dem Brenner Brenngas, Sauerstoff oder Luft und Abgas zugeführt wird, sowie Mitteln (18) zur Zuführung und Ableitung von Sorptionsmittel oder Sorptions- und Oxidationsmittel in einen Waschraum oberhalb des Brennraumes, **dadurch gekennzeichnet**, daß der Brenner (12) zentrisch in der Abdeckung (5) befestigt ist, daß der Brenner (12) Brenngasdüsen (13) und wenigstens eine Abgaszuführdüse (14) aufweist, die senkrecht nach unten in den Brennraum (6) gerichtet sind, daß der Brennraum (6) am unteren Ende durch einen Grundkörper (2) begrenzt wird, daß innerhalb des äußeren Rohres (1) ein inneres Rohr (16) vorgesehen ist, welches sich von der Abdeckung (5) bis in den Grundkörper (2) erstreckt und in einem Abstand oberhalb des Bodens (3) des Grundkörpers (2) endet und den Brennraum seitlich abgrenzt, wobei die beim Verbrennungsvorgang entstehenden Reaktionsprodukte entlang der Innenseite des äußeren Rohres (1) vom Grundkörper (2) nach oben in den Waschraum (7) geleitet werden und wobei das Sorptionsmittel nach dessen Verteilung im Waschraum (7) und Anreicherung mit den Reaktionsprodukten entlang der Innenseite des äußeren Rohres (1) über den Grundkörper (2) abgeleitet wird.

2. Vorrichtung nach Anspruch 1, **dadurch gekennzeichnet**, daß die Brenngasdüsen (13) die Abgaszuführdüsen (14) konzentrisch umgeben.

3. Vorrichtung nach Anspruch 1 und 2, **dadurch gekennzeichnet**, daß dem Brenner (12) eine Kühlvorrichtung zugeordnet ist.

4. Vorrichtung nach einem der Ansprüche 1 bis 3, **dadurch gekennzeichnet**, daß innerhalb des äußeren Rohres (1) und oberhalb des Brenners (12) eine Sprühdüse (18) für das Sorptions- oder Waschmittel angeordnet ist, die als Ringdüse, Vollkegel- oder Hohlkegeldüse ausgebildet ist.

5. Vorrichtung nach Anspruch 4, **dadurch gekennzeichnet,** daß die Sprühdüse (18) über eine Leitung (27) mit einer Kammer (26) innerhalb des Brenners (12) verbunden ist, über die das Sorptions- oder Waschmittel der Sprühdüse (18) zuführbar ist.

6. Vorrichtung nach Anspruch 5, **dadurch gekennzeichnet**, daß die Kammer (26) zwischen den Brenngasdüsen (13) und der Abgaszuführdüse (14) angeordnet ist und diese konzentrisch umgibt.

7. Vorrichtung nach den Ansprüchen 1 bis 6, **dadurch gekennzeichnet**, daß zwischen dem Brennraum (6) und der Abdeckung (5) ein den Brenner (12) konzentrisch umgebender und sich nach unten erweiternder Hitzeschild (15) angeordnet ist.

8. Vorrichtung nach den Ansprüchen 1 bis 7, **dadurch gekennzeichnet,** daß das innere Rohr (16) den Hitzeschild (15) umschließt.

9. Vorrichtung nach Anspruch 8, **dadurch gekennzeichnet**, daß zwischen dem Hitzeschild (15) und der Innenwand des inneren Rohres (16) ein Ringspalt (17) ausgebildet ist und daß der Raum zwischen der Abdeckung (5) und dem Hitzeschild (15) über Öffnungen (8) mit dem Raum außerhalb des äußeren Rohres (1) verbunden ist.

10. Vorrichtung nach einem der Ansprüche 7 bis 9, **da** **durch gekennzeichnet**, daß im Raum zwischen der Abdeckung (5) und dem Hitzeschild (15) ein Düsenring (19) mit Düsen zur Zuführung eines Reinigungsmittels angeordnet ist, die gegen die Innenwand des inneren Rohres (16) gerichtet sind.

11. Vorrichtung nach einem der Ansprüche 1 bis 10, **dadurch gekennzeichnet**, daß der Boden (3) des Grundkörpers (2) an seiner tiefsten Stelle mit einem Abfluß versehen ist.

12. Vorrichtung nach einem der Ansprüche 1 bis 12, **dadurch gekennzeichnet**, daß das äußere und das innere Rohr (1; 16) jeweils aus einem oberen und einem unteren Teil (1a, 16a; 1b, 16b) besteht, die lösbar miteinander verbunden sind.

13. Vorrichtung nach Anspruch 12, **dadurch gekennzeichnet**, daß der Grundkörper (2) lösbar mit dem äußeren Rohr (1) oder dem Teil (1b) des äußeren Rohres (1) verbunden ist.

14. Vorrichtung nach Anspruch 12 und 13, **dadurch gekennzeichnet**, daß das obere Teil (1a) des äußeren Rohres (1) mit der Abdeckung (5) und dem daran befestigten Brenner (1), dem oberen Teil (16a) des inneren Rohres (16), dem Hitzeschild (15), den Öffnungen (8) und dem Düsenring (19) axial nach oben bewegbar ist.

15. Vorrichtung nach Anspruch 12 und 13, **dadurch gekennzeichnet**, daß der Grundkörper (2) axial nach unten bewegbar ist.

16. Vorrichtung nach den Ansprüchen 12 bis 14, **dadurch gekennzeichnet**, daß der obere Teil (16a) des inneren Rohres (16) am unteren Ende eine Querschnittsverengung (22) aufweist, die mit dem oberen Ende des unteren Teiles (16b) einen Kreisringspalt (23) bildet.

17. Vorrichtung nach Anspruch 16, **dadurch gekennzeichnet,** daß zwischen dem oberen Teil (1a) des äußeren Rohres (16) und dem oberen Teil des inneren Rohres ein Schutzrohr (24) angeordnet ist, das den oberen Rand des unteren Teiles (16b) überdeckt.

18. Vorrichtung nach den Ansprüchen 1 bis 17, **dadurch gekennzeichnet**, daß der Brennraum (6) über Durchführungen (21) mit dem Raum außerhalb des Rohres (1) verbunden ist und daß in den Durchführungen (21) Vorrichtungen zur Zündung oder Überwachung des Brenners (12) angeordnet sind.

19. Vorrichtung nach den Ansprüchen 1 bis 18, **dadurch gekennzeichnet**, daß der Brenner (12) Vorrichtungen zu dessen Zündung und Überwachung enthält.

20. Vorrichtung nach den Ansprüchen 1 bis 19, **dadurch gekennzeichnet**, daß sich zwischen der Abdeckung (5) und der Innenseite des äußeren Rohres (1) ein Bürstenrand (11) befindet.

21. Vorrichtung nach den Ansprüchen 1 bis 20, **dadurch gekennzeichnet**, daß das äußere Rohr (1) oberhalb der Abdeckung (5) über einen oder mehrere Abscheider (20) an eine lufttechnische Anlage zur Erzeugung eines Unterdruckes im Brennraum (6) und im Waschraum (7) verbunden ist.

## Claims

1. Waste gas purification device, particularly of waste gases from CVD, plasma etching or similar processes, with at least one combustion chamber (6) vertically arranged within the outer pipe (1), which is closed on its upper end by means of a umbrella-like cover (5) and an internally or externally mixing burner (12), having fuel gas nozzles extending into the combustion chamber (6), whereat fuel gas, oxygen or air and waste gas are supplied to the burner, as well as a means (18) for the supply and discharge of sorbents or sorbents and oxidants in a wash chamber above the combustion chamber, **characterized by the fact**, that the burner (12) is mounted centrical within the cover (5), that the burner (12) has fuel gas nozzles (13) and at least one waste gas supply nozzle (14), which is directed vertically downward into the combustion chamber (6), that the combustion chamber (6) is closed at its lower end by a base (2), that within the outer pipe (1) there is designated an inner pipe (16), which extends from the cover (5) up into the base (2) and which ends at a distance above the bottom (3) of the base (2) and limits the combustion chamber to the sides, whereat the reaction products created in the combustion process are guided upwards along the inside of the outer pipe (1) from the base (2) to the wash chamber (7) and whereat the sorbent, after its dissipation in the wash chamber (7) and enrichment with the reactions products is discharged along the inside of the outer pipe (1) via the base (2).

2. Device according to Claim 1, **characterized by the** **fact**, that the fuel gas nozzles (13) are arranged concentrically around the waste gas supply nozzles (14).

3. Device according to Claim 1 and 2, **characterized by the fact**, that the burner (12) is equipped with a cooling device.

4. Device according one of the Claim 1 to 3,
**characterized by the fact**, that a spray nozzle (18) for the sorbent or cleaning agent is arranged inside to outer pipe (1) and above the burner (12), which may be designed as a concentric nozzle, full cone nozzle or hollow cone nozzle.

5. Device according to Claim 4, **characterized by the fact**, that the spray nozzle (18) is connected to a chamber (26) within the burner (12) by means of a line (27), through which the sorbent or cleaning agent is fed to the spray nozzle (18).

6. Device according to Claim 5, **characterized by the fact**, that the chamber (26) is arranged between the fuel gas nozzles (13) and the waste gas supply nozzle and encloses these concentrically.

7. Device according to Claims 1 to 6, **characterized by the fact**, that a heat shield (15), which is expanding downwards and enclosing the burner (12) concentrically, is arranged between the combustion chamber (6) and the cover (5).

8. Device according to Claims 1 to 7, **characterized by the fact**, that the inner pipe (16) encloses the heat shield (15).

9. Device according to Claim 8, **characterized by the** **fact**, that an annular gap (17) is arranged between the heat shield (15) and the internal wall of the inner pipe (16) and that the space between the cover (5) and the heat shield (15) is connected to the space outside the outer pipe (1) by means of openings (8).

10. Device according to one of the Claims 1 to 9,
**characterized by the fact**, that a nozzle ring (19) with nozzles for the supply of a cleaning agent, which are directed against the internal wall of the inner pipe (16), is arranged in the space between the cover (5) and the heat shield (15)

11. Device according to one of the Claims 1 to 10,
**characterized by the fact**, that the bottom (3) of the base (2) is equipped with a drain at its deepest point.

12. Device according to one of the Claims 1 to 11,
**characterized by the fact**, that the outer and inner pipes (1; 16) each consist of an upper and lower part (1a, 16a; 1b, 16b), which are connected to each other in detachable fashion.

13. Device according to Claim 12, **characterized by the fact**, that the base (2) is connected to the outer pipe (1) or part (1b) of the outer pipe (1) in detachable fashion.

14. Device according to Claim 12 and 13, **characterized by the fact**, that the upper part (1a) of the outer pipe (1) with the cover (5) and the attached burner (1), the upper part (16a) of the inner pipe (16), the heat shield (15), the openings (8) and the nozzle ring (19) can be moved upwards axially.

15. Device according to Claim 12 and 13, **characterized** **by the fact**, that the base (2) is moveable downwards axially.

16. Device according to Claims 12 to 14, **characterized by the fact**, that the upper part (16a) of the inner pipe (16) features a contraction of the cross section (22) at the lower end, which forms an annular gap (23) with the upper end of the lower part (16b).

17. Device according to Claim 16, **characterized by the fact**, that a protective pipe (24), which overlaps the upper edge of the lower part (16b), is arranged between the upper part (1a) of the outer pipe (16) and the upper part of the inner pipe.

18. Device according to Claims 1 to 17, **characterized by the fact**, that the combustion chamber (6) is connected to the space outside the pipe (1) by means of feed-through sleeves (21) and that devices for the ignition and control of the burner (12) are arranged in the feed-through sleeves (21).

19. Device according to Claims 1 to 18, **characterized by the fact**, that the burner (12) contains devices for the purpose of its ignition or control.

20. Device according to Claims 1 to 19, **characterized by the fact**, that there is a brush edge (11) between the cover (5) and the inner side of the outer pipe (1).

21. Device according to Claims 1 to 20, **characterized by the fact**, that the outer pipe (1) is connected to a ventilation system above the cover (5) over one or more separators (20) to create a negative pressure in the combustion chamber (6) and in the wash chamber (7).

## Revendications

1. Appareil d'épuration des gaz d'échappement, particulièrement des gaz issus de procédés CVD, de procédés de corrosion plasmatique et similaires, pourvu d'au moins une chambre de combustion (6) disposée verticalement dans un tube externe (1), lequel est limité vers le haut par un couvercle en écran (5), et d'un brûleur (12) à mélange interne ou externe dont les becs (13) dépassent à l'intérieur de la chambre de combustion (6), alimenté en gaz de combustion, en oxygène ou en air et en gaz d'échappement, ainsi que de dispositifs (18) d'amenée et d'évacuation de sorbants ou de sorbants et oxydants dans une chambre d'épuration située au dessus de la chambre de combustion et en plus l'appareil présente **les caractéristiques** suivantes que le brûleur (12) est fixé au centre du couvercle (5), et le brûleur (12) muni de buses d'alimentation en gaz de combustion (13) et d'au moins une buse d'alimentation en gaz d'échappement (14), dirigées verticalement vers le bas dans la chambre de combustion (6) et la chambre de combustion (6) est limitée vers le bas par un corps de base (2) et dans le tube externe (1), entre le couvercle (5) et le corps de base (2), est placé un tube interne (16) et en plus un espace reste libre entre l'extrémité du tube interne et le fond (3) du corps de base (2) et Le tube interne (16) limite latéralement la chambre de combustion et désormais les produits réactionnels résultant de la combustion sont évacués du corps de base (2) vers le haut dans la chambre d'épuration (7) le long de la paroi intérieure du tube externe (1) et le sorbant, après introduction dans la chambre d'épuration (7) et enrichissement en produits réactionnels, descend le long de la paroi intérieure du tube externe (1) et est évacué par le corps de base (2).

2. Appareil selon la spécification 1, **caractérisé par** la disposition concentrique des buses d'alimentation en gaz de combustion (13) autour des buses d'alimentation en gaz d'échappement (14).

3. Appareil selon les spécifications 1 et 2, **caractérisé par** un brûleur (12) muni d'un dispositif de refroidissement.

4. Appareil selon l'une des spécifications 1 à 3, **caractérisé par** la présence à l'intérieur du tube externe (1) et au dessus du brûleur (12) d'une buse de vaporisation (18) du sorbant ou agent de nettoyage, laquelle se présente soit sous forme de buse annulaire, soit en cône plein ou encore en cône creux.

5. Appareil selon la spécification 4, **caractérisé par** la buse de vaporisation (18) étant reliée par une conduite (27) à une chambre (26) située à l'intérieur du brûleur (12), par laquelle le sorbant ou agent de nettoyage est amené à la buse de vaporisation (18).

6. Appareil selon la spécification 5, **caractérisé par** la disposition concentrique de la chambre (26) entre les buses d'alimentation en gaz de combustion (13) et les buses d'alimentation en gaz d'échappement (14).

7. Appareil selon les spécifications 1 à 6, **caractérisé par** la présence d'un écran thermique (15) entre la chambre de combustion (6) et le couvercle (5), disposé de façon concentrique autour du brûleur (12) et s'élargissant vers le bas.

8. Appareil selon les spécifications 1 à 7, **caractérisé par** le tube interne (16) encerclant l'écran thermique (15).

9. Appareil selon la spécification 8, **caractérisé par** la présence d'un passage annulaire (17) entre l'écran thermique (15) et la paroi intérieure du tube interne (16), et par la présence d'ouvertures (8) reliant l'espace compris entre le couvercle (5) et l'écran thermique (15) à l'espace situé en dehors du tube externe (1).

10. Appareil selon l'une des spécifications 7 à 9 **caractérisé par** la présence d'une couronne directrice (19) dans l'espace compris entre le couvercle (5) et l'écran thermique (15), laquelle est pourvue de buses d'alimentation en agent de nettoyage dirigées contre la paroi intérieure du tube interne (16).

11. Appareil selon l'une des spécifications 1 à 10, **caractérisé par** la présence d'une vidange au point le plus bas du fond (3) du corps de base (2).

12. Appareil selon l'une des spécifications 1 à 12, **caractérisé par** les tubes externe et interne (1, 16) se composant chacun d'une partie supérieure et inférieure (1a, 16a; 1b, 16b), chaque partie étant amovible.

13. Appareil selon la spécification 12, **caractérisé par** le corps de base (2) pouvant se détacher du tube externe (1) ou de la partie (1b) du tube externe (1).

14. Appareil selon les spécifications 12 et 13, **caractérisé par** le permettant un déplacement axial vers le haut de la partie supérieure (1a) du tube externe (1), du couvercle (5) brûleur (1) compris, de la partie supérieure (16a) du tube interne (16), de l'écran thermique (15) des ouvertures (8) et de la couronne directrice (19).

15. Appareil selon les spécifications 12 et 13, **caractérisé par** le permettant un déplacement axial vers le bas du corps de base (2).

16. Appareil selon les spécifications 12 à 14, **caractérisé par** une réduction de section (22) de la partie supérieure (16a) du tube interne (16), laquelle forme un passage en couronne (23) avec l'extrémité supérieure de la partie inférieure (16b).

17. Appareil selon la spécification 16, **caractérisé par** la présence d'un tube protecteur (24) entre la partie supérieure (1a) du tube externe (16) et la partie supérieure du tube interne, lequel recouvre le bord supérieur de la partie inférieure (16b).

18. Appareil selon les spécifications 1 à 17, **caractérisé par** la présence de traversées (21) reliant la chambre de combustion (6) à l'espace en dehors du tube (1) et dans les traversées (21) sont placés des dispositifs d'allumage ou de surveillance du brûleur (12).

19. Appareil selon les spécifications 1 à 18, **caractérisé par** le brûleur lui-même (12) étant pourvu de dispositifs d'allumage ou de surveillance.

20. Appareil selon les spécifications 1 à 19, **caractérisé par** la présence de brosses (11) entre le couvercle (5) et la paroi intérieure du tube externe (1).

21. Appareil selon les spécifications 1 à 20, **caractérisé par** le raccordement, au moyen de un ou plusieurs séparateurs (20), du tube externe (1) au dessus du couvercle (5) à une installation aéraulique servant à provoquer une dépression dans la chambre de combustion (6) et la chambre d'épuration (7).
